# EUROPÄISCHE PATENTSCHRIFT

(11) **EP 2 762 427 B1**
(45) Veröffentlichungstag und Bekanntmachung des Hinweises auf die Patenterteilung: **11.04.2018**
(21) Anmeldenummer: 14154027.8
(22) Anmeldetag: 05.02.2014
(51) Int. Cl.: B65G 29/02, B65G 47/248, B65G 47/252

(54) **Vorrichtung zum Wenden eines Gegenstandes**
Device for turning an object
Dispositif pour retourner un objet

(30) Priorität: 05.02.2013 DE 102013101148
(43) Veröffentlichungstag der Anmeldung: 06.08.2014
(73) Patentinhaber: Windmöller & Hölscher KG, 49525 Lengerich (DE)
(72) Erfinder: Tillmann, Guido, 48607 Ochtrup (DE); Titz, Alexander, 33619 Bielefeld (DE)

(56) Entgegenhaltungen:
- EP-B1- 1 971 540
- DE-A1-102008 017 420
- DE-B- 1 047 713
- DE-U1- 20 219 892
- GB-A- 1 305 270
- GB-A- 1 585 830
- US-A- 2 984 364
- US-A- 3 710 955

## Beschreibung

Die Erfindung betrifft eine Vorrichtung zum Wenden eines Gegenstandes, insbesondere eines Paketes aus gestapelten Säcken, mit den Merkmalen des Oberbegriffs des Anspruchs 1. Diese Merkmale ergeben sich aus GB 1 585 830 A. Vorrichtungen zum Wenden von Gegenständen werden beim Transportieren und Palettieren von Paketen aus gestapelten Säcken verwendet. Dabei kommt es manchmal vor, dass die Säcke einander nicht flächig anliegen und die Pakete deswegen in der Mitte zusammensinken. Dies kann beispielsweise dann der Fall sein, wenn die Säcke an ihren Enden gefaltete Böden oder Ventile aufweisen. Um dennoch eine möglich ebene Fläche beim Palettieren von solchen Paketen zu erhalten, ist es daher manchmal notwendig, diese Pakete zu wenden.
In herkömmlichen Vorrichtungen werden die Pakete zwischen zwei höhenverstellbaren Transportplatten eingeklemmt und gewendet. Dabei werden die Transportplatten an einem Gestell zwischen zwei Gestellelementen angeordnet und verschiebbar, meistens mittels Führungsschienen an diesen Gestellelementen befestigt. Die Gestellelemente werden durch einen Trommelantrieb gedreht und wenden somit die Transportplatten. Üblicherweise greift der Trommelantrieb lediglich von einer Seite am Gestell ein, um nur eines der Gestellelemente in Bewegung zu setzen. Die Gestellelemente müssen daher durch mindestens ein torsionssteifes Verbindungselement verbunden werden, welches es ermöglicht, die Rotationsbewegung vom antriebsseitigen Gestellelement an das zweite Gestellelement zu übertragen, welches dem Drehantrieb abgewandt ist. Dabei hat sich als Nachteil herausgestellt, dass beim Drehen der Gestellelemente die Transportplatten aufgrund ihrer Trägheit leicht aus der Führungsschiene ausschlagen können, die von dem Drehantrieb entfernt ist, und dass die Transportplatten gar vom Gestell abfallen können. Aus der DE 199 31 145 A1 ist eine Vorrichtung zum Wenden eines Gegenstandes bekannt, die mit einer Haltevorrichtung zum Aufnehmen, Wenden und Abgeben des Gegenstandes und einer Drehvorrichtung zum Wenden der Haltevorrichtung ausgeführt ist. Die Haltevorrichtung weist dabei zwei Transportelemente auf, die den Gegenstand einklemmen können, wobei die Transportelemente mittels der Drehvorrichtung gewendet werden können. Die Drehvorrichtung ist mit zwei Gestellelementen ausgebildet, die die Transportelemente beidseitig umschließen. An den Gestellelementen sind Führungsschienen vorgesehen, in denen die Transportelemente bewegbar angeordnet sind. Auch die DE 199 31 145 A1 sieht einen Trommelantrieb vor, um eines der Gestellelemente zu drehen. Dabei könnte es nachteilig sein, dass die Gestellelemente durch schwere und große Elemente verbunden werden müssen, um die Drehbewegung gleichmäßig an die Transportelemente zu übertragen. Außerdem könnte es von Nachteil sein, dass während der Drehbewegung die Transportelemente aus den Führungsschienen ausschlagen können und der Gegenstand herausfallen kann. Aus den Schriften DE 10 47 713 B, GB 1 305 270 A, DE 10 2008 017 420 A1 und US 2 984 364 A sind ebenfalls Vorrichtungen zum Wenden eines Gegenstandes bekannt.
Der Erfindung liegt daher die Aufgabe zugrunde, eine verbesserte Vorrichtung zum Wenden eines Gegenstandes, insbesondere eines Paketes aus gestapelten Säcken bereitzustellen, die die oben genannten Nachteile überwindet. Insbesondere ist es die Aufgabe der Erfindung eine Vorrichtung zum Wenden eines Gegenstandes zu schaffen, die ein zuverlässiges und stabiles Wenden des Gegenstandes ermöglicht. Die Vorrichtung soll einen einfachen Aufbau aufweisen, wenig Bauteile erfordern und den Materialaufwand vermindern. Die Aufgabe der vorliegenden Erfindung wird durch sämtliche Merkmale des Patentanspruches 1 gelöst. In den abhängigen Patentansprüchen sind mögliche Ausgestaltungen der Erfindung beschrieben.
Die Erfindung sieht eine Vorrichtung zum Wenden eines Gegenstandes, insbesondere eines Paketes aus gestapelten Säcken vor, die mit einer Haltevorrichtung zum Aufnehmen, Wenden und Abgeben des Gegenstandes, die zwei höhenverstellbare Transportelemente zum Befördern des Gegenstandes aufweist, und einer Drehvorrichtung zum Drehen der Transportelemente um eine ortsfeste Drehachse ausgeführt ist, die ein drehbares Gestell zum beidseitigen Befestigen der Transportelemente aufweist, wobei die Transportelemente bewegbar am Gestell befestigt sind, und wobei die Drehvorrichtung einen Drehantrieb aufweist, welcher das Gestell beidseitig antreibt.
Im Gegensatz zu einem herkömmlichen, einseitigen Drehantrieb ist es besonders vorteilhaft, dass das Gestell gleichzeitig von zwei Seiten durch einen Drehantrieb angetrieben ist, an welchem die Transportelemente befestigt sind. So kann eine stabile Drehbewegung der Transportelemente realisiert werden. Dabei kann die Drehgeschwindigkeit des Gestells bei gleicher Leistung des Drehantriebes erhöht werden. Die erfindungsgemäße Drehvorrichtung benötigt außerdem keine schweren torsionssteifen Verbindungselemente mehr, um das Gestell zu stabilisieren und um die Rotationsbewegung gleichmäßig auf entlang der Transportelemente zu übertragen. Die Transportelemente können daher während der Drehbewegung zuverlässig an beiden Seiten am Gestell gehalten werden. Im Gegensatz zu einem einseitigen Drehantrieb kann die Vorrichtung nicht nur stabiler sondern auch leichter ausgebildet werden, sodass der Energieverbrauch zum Wenden des Gegenstandes bei steigender Drehgeschwindigkeit reduziert werden kann. Die Haltevorrichtung kann einen Transportantrieb zum Antreiben der Transportelemente und folglich zum Befördern des Gegenstandes aufweisen. Der Transportantrieb kann dabei ortsfest an einem Gehäuse der Vorrichtung oder mitbewegbar am Gestell befestigt sein. Der Transportantrieb ermöglicht neben dem Drehantrieb, dass der Gegenstand in eine Transportrichtung befördert werden kann, während der Drehantrieb ausschließlich zum Wenden der Transportelemente vorgesehen sein kann. Vorteilhafterweise kann die erfindungsgemäße Vorrichtung als eine Baueinheit ausgeführt werden und flexibel an einem geeigneten Ort einer Transportvorrichtung positioniert werden, um das Wenden des Gegenstandes zu ermöglichen.
Vorteilhafterweise können die Transportelemente mit einem Verstellmechanismus miteinander verbunden werden, um den Gegenstand zum Wenden einzuklemmen. Der Verstellmechanismus kann einen Pneumatikzylinder aufweisen, wobei insbesondere der Pneumatikzylinder Schnellentlüftungsventile aufweisen kann. Pneumatische Antriebe erlauben vorteilhafterweise hohe Arbeitsgeschwindigkeiten, wobei gleichzeitig ein elastisches und nachgiebiges Antriebsverhalten erzielt werden kann. Der Verstellmechanismus ist daher besonders geeignet, an bewegten Objekten angeordnet zu werden, sodass der Verstellmechanismus direkt an den Transportelementen befestigt werden kann. Weiterhin kann es von Vorteil sein, dass durch den Verstellmechanismus Gegenstände unterschiedlicher Größen und Höhen zuverlässig aufgenommen werden können. Die Druckluftzufuhr kann vorteilhafterweise durch einen flexiblen Schlauch bereitgestellt werden, welcher beispielsweise durch die Drehachse der Vorrichtung zum Pneumatikzylinder geführt werden kann.

Die Erfindung sieht vor, dass die Drehvorrichtung einen Stoßdämpfer aufweist, um die Bewegung der Transportelemente aufeinander zu dämpfen, wobei der Stoßdämpfer drehfest am Gestell befestigt ist. Insbesondere in modernen Vorrichtungen, die hohe Transport- und Drehgeschwindigkeiten aufweisen, können Stoßdämpfer den Gegenstand vor dem zu starken Aufeinanderstoßen mit den Transportelementen schützen. Die Stoßdämpfer können dabei mit dem Gestell und somit mit den Transportelementen mitbewegt werden, sodass in jeder Drehposition der Transportelemente der Gegenstand zuverlässig und dennoch gedämpft eingeklemmt werden kann. Die Transportelemente können in Form von Rollenbahnen ausgebildet sein. Ferner ist es denkbar, dass jedes Transportelement mindestens zwei Transportrollen aufweisen kann, welche mittels eines Verbindungsriemens, insbesondere eines Flach-, Zahn- oder Keilrippenriemens miteinander in Wirkverbindung stehen können. Vorteilhafterweise können Rollenbahnen flexibel ausgebildet werden und den räumlichen Vorgaben sowie der Größe des Gegenstandes angepasst werden. Außerdem ist es vorteilhaft, dass derartige Transportelemente an das Gewicht des zu transportierenden Gegenstandes angepasst werden können. Dabei können die Rollen aus unterschiedlichen Materialien wie Stahl oder Kunststoff in Abhängigkeit von dem Gewicht des zu transportierenden Gegenstandes ausgebildet werden. Auch kann die Aufnahme und die Transportfähigkeit der Rollenbahnen durch verschiedene Breiten der Transportrollen eingestellt werden. Zum Antrieb der Transportrollen, die jeweils in Paaren mittels eines Verbindungsriemens verbunden sein können, kann die Verbindung zum Transportantrieb vorteilhafterweise nur an einer der Transportrollen hergestellt werden. Wird nur eine Transportrolle in Bewegung versetzt, werden alle anderen Transportrollen automatisch mitbewegt, da die Bewegung über die Verbindungsriemen übertragen wird. Alternativ ist es denkbar, dass die Transportrollen über ein Getriebe mit dem Transportantrieb verbunden werden können, welches einen Flachriemen und ein Antriebsrad mit entsprechendem Reibbelag aufweisen kann. Alternativ können die Transportelemente in Form einer Förderbahn mit einem Förderband und zwei Umlenkrollen ausgebildet sein. Dabei kann der Transportantrieb an einer der Umlenkrollen angreifen. Alternativ oder zusätzlich kann vorgesehen sein, dass der Transportantrieb in einer der Transport- bzw. Umlenkrollen angeordnet werden kann.
Die Transportelemente können vorteilhafterweise beidseitig Befestigungselemente aufweisen, die die Transportrollen umschließen und zum Befestigen der Transportelemente am Gestell dienen. So können die Transportelemente mit den Transportrollen als ein gemeinsames Bauteil ausgebildet sein. Dadurch kann die Befestigung der Transportrollen am Gestell vereinfacht werden, wobei die Befestigungselemente am Gestell verschiebbar gelagert werden können.

Ferner kann der Drehantrieb einen Motor, insbesondere einen Trommelmotor aufweisen. Dabei kann das Gestell zwei Drehscheiben aufweisen, um die Transportelemente beidseitig zu umschließen. Der Trommelantrieb kann dabei die Antriebswirkung des Motors über einen Flach-, Zahn- oder Keilrippenriemen an das Gestell übertragen. Der Trommelantrieb kann vorteilhafterweise schwere Gegenstände mit einer hohen Übersetzungskraft in Bewegung setzen und ein hohes Drehmoment erzeugen. Somit kann die Vorrichtung eine verbesserte Drehgeschwindigkeit des Gegenstandes bereitstellen und eine schnelle Beförderung des Gegenstandes ermöglichen.

Jede Drehscheibe kann eine Führungsschiene aufweisen, die mit Gleitelementen zusammenwirken kann, die beidseitig an den Transportelementen angeordnet sein können. Vorteilhafterweise können die Führungsschienen dazu dienen, die Transportelemente an den Drehscheiben zu befestigen, und andererseits die Transportelemente aufeinander bewegbar an den Drehscheiben zu lagern. Dann können die Transportelemente nicht nur mit den Drehscheiben gedreht werden sondern gleichzeitig auf- und voneinander bewegt werden, um den Gegenstand zum Wenden einzuklemmen und zum weiteren Transport freizugeben.

Der Drehantrieb kann mindestens einen Abstandshalter aufweisen, der die Drehscheiben verbinden kann, der jedoch nicht mehr zur Übertragung der Drehbewegung zwischen den Drehscheiben dienen und kein großes Gewicht aufweisen muss. Der Abstandshalter dient vorteilhafterweise lediglich zum Halten der relativen Position der Drehscheiben zueinander. Vorteilhafterweise kann durch die Erfindung das Gewicht des Abstandshalters reduziert werden, wodurch die Vorrichtung insgesamt an Gewicht verliert, sodass die erforderliche Energie zum Drehen der Vorrichtung vermindert werden kann. Der Drehantrieb kann zwei Getriebeelemente aufweisen, die um eine Drehwelle mittels eines Drehantriebes drehbar sind, um beide Drehscheiben gleichzeitig anzutreiben. Die Getriebeelemente können direkt unter den Drehscheiben positioniert werden und gleichen Abstand zu einander aufweisen wie die Drehscheiben. Im Gegensatz zu einem einseitigen Drehantrieb ist es besonders vorteilhaft, dass die Drehscheiben gleichzeitig durch nur einen Drehantrieb mittels der zwei Getriebeelemente angetrieben werden können. Dabei kann die Drehgeschwindigkeit des Gestells bei gleicher Drehantriebsleistung erhöht werden. Die Drehvorrichtung benötigt dabei keine schweren Verbindungselemente mehr, um die Drehscheiben zu verbinden und um die Rotationsbewegung von der antriebsseitigen Drehscheibe an die zweite Drehscheibe zu übertragen, welche dem Drehantrieb abgewandt ist. Die Transportelemente können daher zuverlässig am Gestell befestigt und in den Führungsschienen gelagert werden, wobei gleichzeitig eine hohe Drehgeschwindigkeit der Haltevorrichtung gewährleistet werden kann. Der Drehantrieb kann zwei Übertragungselemente, insbesondere zwei Flach-, Zahn- oder Keilrippenriemen aufweisen, um die Wirkung der Getriebeelemente auf die Drehscheiben zu übertragen. Die Übertragungselemente sorgen vorteilhafterweise dazu, dass die Wirkung des Drehantriebes gleich an beiden Drehscheiben übertragen werden kann. Im Gegensatz zu einem einseitigen Drehantrieb kann die Vorrichtung stabiler und dennoch leichter ausgebildet werden, wobei der Energieverbrauch zum Wenden des Gegenstandes bei steigender Drehgeschwindigkeit optimiert werden kann.
Nach einem besonderen Vorteil der Erfindung kann der Transportantrieb mit dem Gestell und somit mit den Transportelementen mitbewegt werden, sodass beim Wenden des Gestells, die Transportelemente weiter angetrieben werden können und der Gegenstand weiter in eine Transportrichtung bewegt werden kann. Damit kann sichergestellt werden, dass der Transport des Gegenstandes während des Wendens nicht unterbricht. Somit kann die Transportgeschwindigkeit erhöht und die Leistung der Vorrichtung verbessert werden. Insbesondere in modernen Betrieben mit einer dauerhaften Produktion, Beförderung und Palettierung von gestapelten Säcken ist es von erheblichem Vorteil, eine hohe Leistung zu gewährleisten, um den immer höheren Standarden zu entsprechen und eine gewinnbringende Produktionsgeschwindigkeit sicherzustellen. Da der Transportantrieb mitgedreht werden kann, muss die Wirkverbindung zwischen dem Transportantrieb und den Transportelementen nicht unterbrochen werden. Daher ergibt sich der Vorteil, dass der Transportantrieb starr am Gestell befestigt werden kann, da der Bedarf entfällt, die Bewegung der Transportelemente auf den Transportantrieb abzufedern. Die Wirkverbindung zwischen dem Transportantrieb und den Transportelementen kann vorteilhafterweise während des Wendens und des Transportierens des Gegenstandes aufrechterhalten werden. Deswegen kann die Wirkverbindung auf eine einfache Weise und mit Hilfe einfacher Bauteile wie Zahnriemen und Drehräder bzw. Rollen hergestellt werden.
Vorteilhafterweise kann ein Schleifring an der Drehachse vorgesehen sein, um den Transportantrieb, insbesondere den Antriebsmotor zu speisen.
Die Erfindung geht weiterhin von dem Gedanken aus, dass der Transportantrieb für jedes Transportelement eine eigene Antriebseinheit aufweisen kann. Dadurch kann der Vorteil erreicht werden, dass beide Transportelemente ungeachtet der Drehposition zum Transportieren des Gegenstandes ausgelegt sein können. Da beide Transportelemente am Transport des Gegenstandes teilnehmen können, kann die Transportgeschwindigkeit erhöht werden, wobei gleichzeitig die erforderliche Antriebsleistung für den Transport reduziert werden kann. Außerdem ist es von Vorteil, dass die Antriebseinheiten kleiner und leichter ausgeführt werden können.
Weitere Vorteile, Merkmale und Einzelheiten der Erfindung ergeben sich aus der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer herkömmlichen Vorrichtung zum Wenden eines Gegenstandes,
- Fig. 2: eine schematische Darstellung einer erfindungsgemäßen Vorrichtung zum Wenden eines Gegenstandes,
- Fig. 3: eine schematische Darstellung eines erfindungsgemäßen Verstellmechanismus,
- Fig. 4: eine schematische Darstellung erfindungsgemäßer Stoßdämpfer,
- Fig. 5: eine schematische Darstellung eines Schleifringes,
- Fig. 6: eine schematische Darstellung eines Transportelementes,
- Fig. 7: eine perspektivische Darstellung der herkömmlichen Vorrichtung zum Wenden eines Gegenstandes, und
- Fig. 8: eine perspektivische Darstellung der erfindungsgemäßen Vorrichtung zum Wenden eines Gegenstandes.

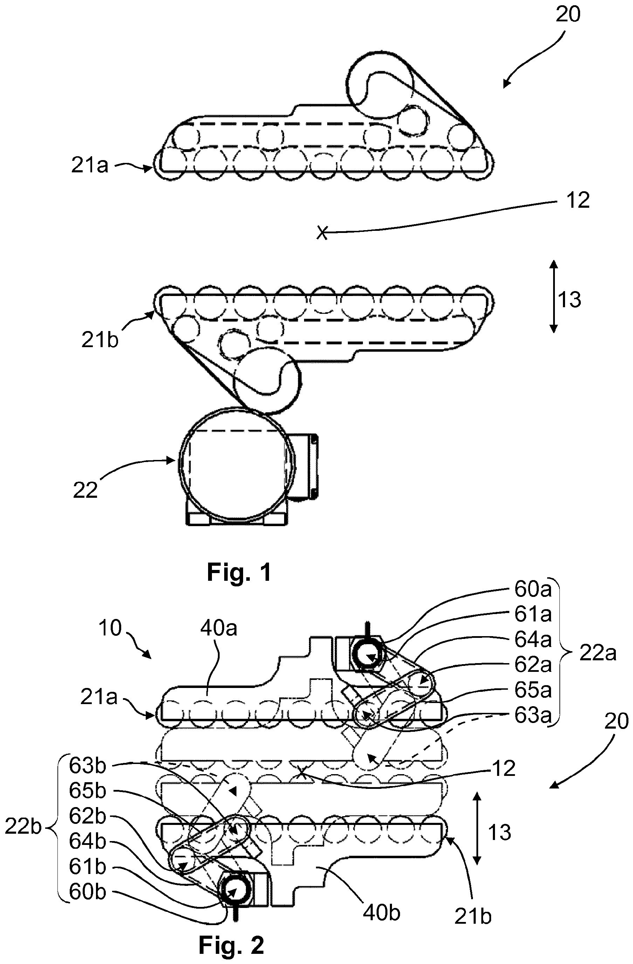

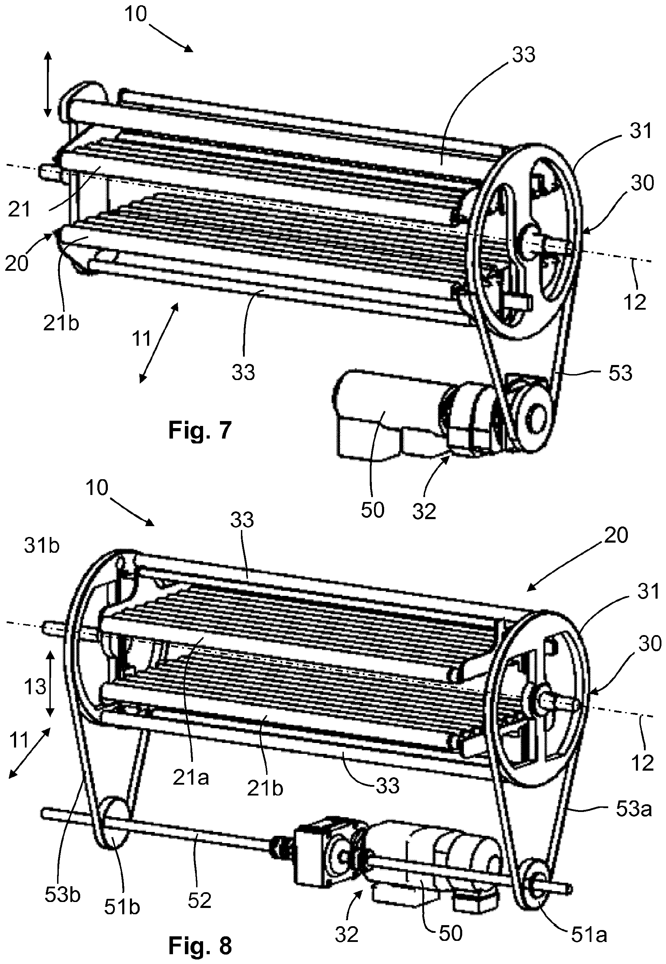

Die Figur 1 zeigt eine Vorrichtung zum Wenden eines Gegenstandes, wie sie aus dem Stand der Technik bekannt ist, und die Figur 2 die erfindungsgemäße Vorrichtung 10, wobei nachfolgend auf die Vorrichtungen und deren Unterschiede im Detail eingegangen wird. Die herkömmliche Vorrichtung umfasst ähnlich wie die erfindungsgemäße Vorrichtung 10 eine Haltevorrichtung 20 zum Aufnehmen, Wenden und Abgeben des Gegenstandes, die zwei höhenverstellbare 13 Transportelemente 21a, 21b zum Befördern des Gegenstandes und einen Transportantrieb 22 zum Antreiben der Transportelemente 21a, 21b aufweist, und eine Drehvorrichtung 30 zum Drehen der Transportelemente 21a, 21b um eine ortsfeste Drehachse 12, die näher anhand der Figuren 7 und 8 beschrieben wird.

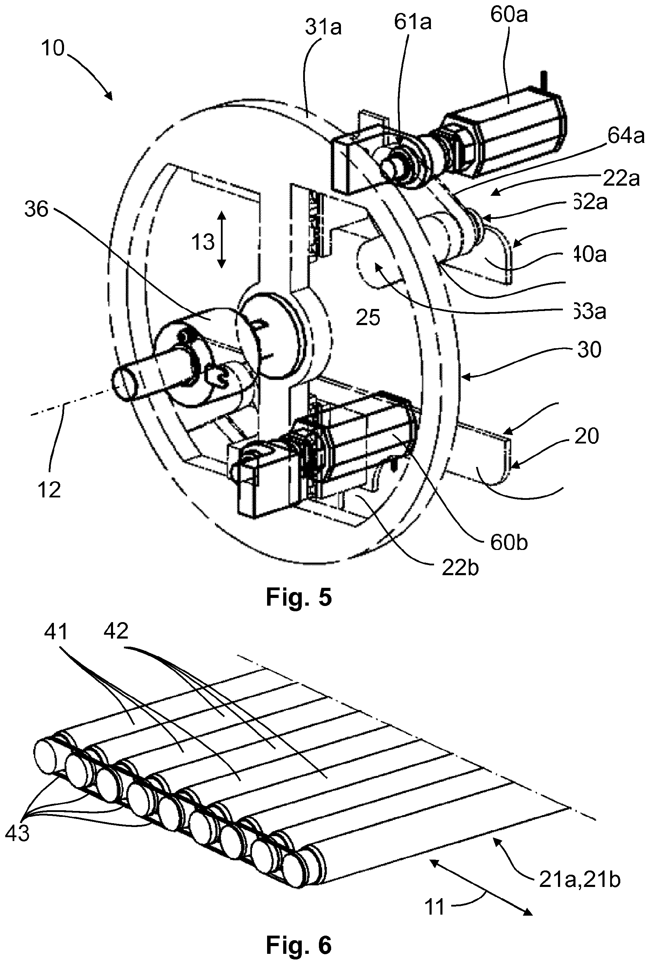

Die Erfindung betrifft den Transportantrieb 22, wie gezeigt in der Figur 2, der im Gegensatz zum herkömmlichen Transportantrieb 22 der Figur 1 mit einem Gestell 31 der Drehvorrichtung 30, die in den Figuren 7 und 8 gezeigt ist, und somit mit den Transportelementen 21a, 21b bewegbar ist. Der Erfindungsgedanke liegt dabei darin, dass beim Wenden der Transportelemente 21a, 21b sie weiter angetrieben werden können und der Gegenstand weiter in eine Transportrichtung 11 bewegen können, die in der Figur 6 gezeigt ist. Der Vorteil der Erfindung liegt dabei darin, dass der Transport des Gegenstandes auch während des Wendens der Transportelemente 21a, 21b nicht unterbrochen wird.

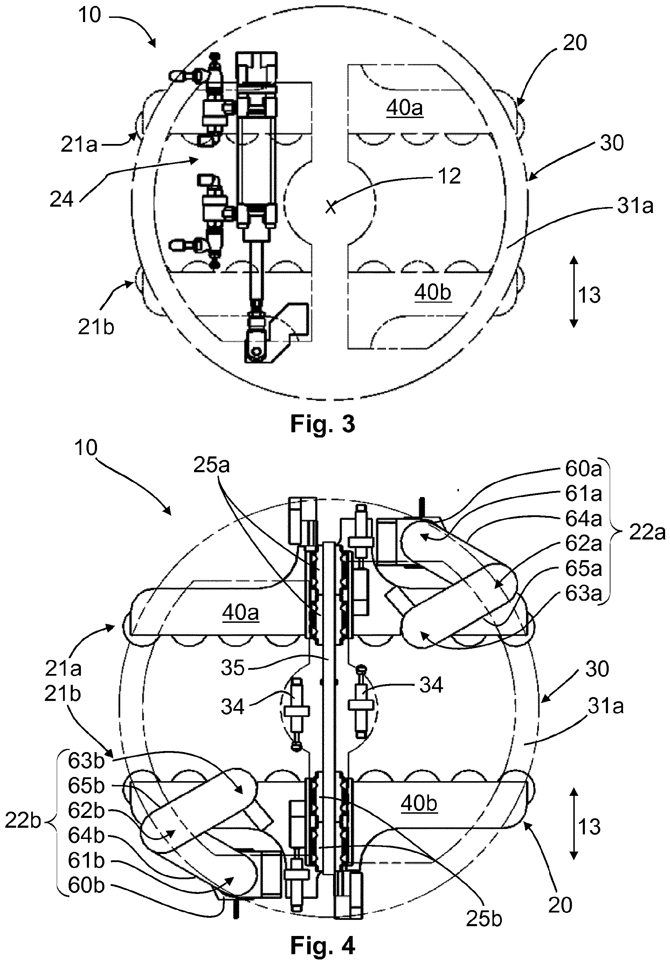

Der Transportantrieb 22 ist starr am Gestell 31 befestigt, wie gezeigt in den Figuren 4 und 5. Im Gegensatz dazu ist der Transportantrieb 22 der herkömmlichen Vorrichtung der Figur 1 ortsfest an einem nicht dargestellten Gehäuse der Vorrichtung angeordnet. Bei der Vorrichtung der Figur 1 werden nur die Transportelemente 21a, 21b in eine vertikale Richtung 13 aufeinander bewegt, um den Gegenstand einzuklemmen. Dabei muss der herkömmliche Transportantrieb 22 beim Bewegen der Transportelemente 21a, 21b wieder auseinander, die Bewegung der Transportelemente 21a, 21b zum Transportantrieb 22 zumindest zum Teil abfedern, bis die Wirkverbindung zwischen den Transportelementen 21a, 21b und dem Transportantrieb 22 hergestellt ist. Um dies zu erreichen, wird der ortsfeste Transportantrieb 22 normalerweise federnd am Gehäuse der Vorrichtung gelagert. Im Gegensatz zum Stand der Technik kann der erfindungsgemäße Transportantrieb 22 fest an der Drehvorrichtung 30 befestigt sein (s. Figuren 3 und 4), da die Wirkverbindung zwischen dem erfindungsgemäßen Transportantrieb 22 und den Transportelementen 21a, 21b auch während des Wendens nicht unterbricht. Die Wirkübertragung vom herkömmlichen Transportantrieb 22 auf die Transportelemente 21a, 21b wird mittels eines Antriebsrades mit einem speziellen Reibbelag und einem korrespondierenden Flachriemen auf der Seite der Transportelemente 21a, 21b hergestellt, der mittels eines Radgetriebes die Transportelemente 21a, 21b in Bewegung setzt. Im Gegensatz dazu kann die Wirkverbindung zwischen dem erfindungsgemäßen Transportantrieb 22 und den Transportelementen 21a, 21b auf eine einfache Weise und mittels einfacher sowie weniger Bauteile wie Flach-, Zahn- oder Keilrippenriemen 64, 65 hergestellt werden und während des Transportierens und Wendens des Gegenstandes aufrechterhalten bleiben.

Die Figur 2 zeigt ein Ausführungsbeispiel der Erfindung, bei dem der Transportantrieb 22 für jedes Transportelement 21a, 21b eine eigene Antriebseinheit 22a, 22b aufweist. Gemäß dem Ausführungsbeispiel dienen die zwei Antriebseinheiten 22a, 22b dazu, dass beide Transportelemente 21a, 21b ungeachtet deren Drehposition den Gegenstand weiter transportieren können. Dadurch kann die Transportgeschwindigkeit erheblich erhöht werden, wobei gleichzeitig die erforderliche Leistung der Antriebseinheiten 22a, 22b reduziert werden kann. Deswegen können kleinere und leichtere Antriebseinheiten 22a, 22b verwendet werden.
Die Figur 3 zeigt einen Verstellmechanismus 24, der dazu dient, die Transportelemente 21a, 21b miteinander zu verbinden und in einer vertikalen Klemmrichtung 13 aufeinander zu bewegen, um den Gegenstand zum Wenden einzuklemmen. Der Verstellmechanismus 24 ist als ein Pneumatikzylinder 24 ausgebildet. Der Pneumatikzylinder 24 weist dabei Schnellentlüftungsventile auf, um die Transportelemente 21a, 21b schnell zu bewegen und dennoch ein elastisches und nachgiebiges Einklemmen des Gegenstandes zu erzielen. Der Verstellmechanismus 24 ist direkt an den Transportelementen 21a, 21b befestigt. Die Druckluftzufuhr kann vorteilhafterweise durch einen flexiblen Schlauch bereitgestellt werden, der beispielsweise durch die ortsfeste Drehachse 12 zum Verstellmechanismus 24 geführt werden kann. In der Figur 4 sind Stoßdämpfer 34 gezeigt, die dazu dienen, die Bewegung der Transportelemente 21a, 21b aufeinander zu dämpfen und den Gegenstand bei Einklemmen 21a, 21b vor mechanischen Einwirkungen durch die Transportelemente 21a, 21b zu schützen. Die Stoßdämpfer 34 sind erfindungsgemäß drehfest an der Drehvorrichtung 30 befestigt, wobei während des Wendens die Stoßdämpfer 34 mit den Transportelementen 21a, 21b mitbewegt werden. Die Figur 5 zeigt eine weitere vorteilhafte Ausführungsform der Erfindung mit einem Schleifring 36, der an der Drehachse 12 angeordnet ist, um die Antriebsmotoren 60a, 60b der drehbaren Antriebseinheiten 22a, 22b mit Energie zu versorgen.

Die Figur 6 zeigt ein Ausführungsbeispiel der Transportelemente 21a, 21b, die in Form von Rollenbahnen ausgebildet sind. Die Rollenbahn umfasst mehrere Transportrollen 41, 42, wobei die Anzahl von Transportrollen 41, 42 sowie deren Größe und Gewicht an die Maße des Gegenstandes angepasst werden können. Die Transportrollen 41, 42 können aus verschiedenen Materialien wie Stahl oder Kunststoff ausgebildet sein, je nachdem wie schwer und groß der zu transportierende Gegenstand ist. Jede zwei benachbarten Transportrollen 41, 42 sind mit jeweils einem Verbindungsriemen 43, insbesondere drehfest miteinander verbunden, um die Drehbewegung von einer Transportrolle 41, 42 zur der anderen zu übertragen. Der Verbindungsriemen 43 kann beispielsweise als ein Flach-, Zahn- oder Keilrippenriemen ausgebildet sein. Im Ausführungsbeispiel wird nur eine der Transportrollen 41, 42 in Bewegung gesetzt (s. Figuren 2 und 4), durch die Verbindungsriemen 43 wird die Drehbewegung auf alle anderen Transportrollen 41, 42 übertragen.
Die Transportelemente 21a, 21b sind, wie gezeigt in den Figuren 2 bis 5, von beiden Endseiten drehbar an Befestigungselementen 40a, 40b angeordnet, die die Transportrollen 41, 42 umschließen und außerdem zum Befestigen der Transportelemente 21a, 21b an der Drehvorrichtung 30 dienen. Die Figur 4 zeigt, dass die Befestigungselemente 40a, 40b dabei am Gestell 31 der Drehvorrichtung 30 verschiebbar entlang einer Führungsschiene 35 gelagert sind. Das Gestell 31 der Drehvorrichtung 30 weist zwei Drehscheiben 31a, 31b auf, die ausführlicher in Figur 8 gezeigt sind. Jede der Drehscheiben 31a, 31b ist dabei mit einer Führungsschiene 35 ausgebildet, um die Transportelemente 21a, 21b von beiden Endseiten verschiebbar zu lagern. Jede Führungsschiene 35 wirkt erfindungsgemäß mit Gleitelementen 25a, 25b zusammen, die an den Befestigungselementen 40a, 40b der Transportelemente 21a, 21b angeordnet sind. Erfindungsgemäß werden die Transportelemente 21a, 21b nicht nur mit den Drehscheiben 31a, 31b mitgedreht sondern gleichzeitig auf- und voneinander entlang des Pfeils 13 bewegt, um den Gegenstand zum Wenden einzuklemmen und zum weiteren Transport freizugeben.

Die Antriebseinheiten 22a, 22b weisen jeweils ein Antriebsrad 61a, 61b, das durch jeweils einen Antriebsmotor 60a, 60b angetrieben wird, und ein Umlenkrad 62a, 62b auf, um die Wirkung des Antriebsmotors 60a, 60b auf das entsprechende Transportelement 21a, 21b über ein Übertragungsrad 63a, 63b zu übertragen. Die Antriebseinheiten 22a, 22b sind gelenkig mit einem Gelenk im Umlenkrad 62a, 62b ausgebildet. Der Antriebsmotor 60a, 60b ist starr am Gestell 31 befestig, wobei durch die gelenkigen Antriebseinheiten 22a, 22b die Antriebswirkung an Transportelemente 21a, 21b übertragen wird, die bewegbar am Gestell 31 angeordnet sind. Dadurch wird erreicht, dass während der Klemmbewegung sowie während des Drehens der Gegenstand weiter in die Transportrichtung 11 bewegt wird.
Das Antriebsrad 61a, 61b ist dabei drehfest an der entsprechenden Drehscheibe 31a, 31b befestigt. Dagegen ist das Übertragungsrad 63a, 63b am Transportelement 21a, 21b befestigt und mit dem Transportelement 21a, 21b bewegbar. Dabei wird das Umlenkrad 62a, 62b zumindest zum Teil mit dem Transportelement 21a, 21b mitgezogen. Das Umlenkrad 62a, 62b ist frei beweglich und steht nur mit dem Antriebsrad 61a, 61b und dem Übertragungsrad 63a, 63b in mechanischer Wirkverbindung. Das Antriebsrad 61a, 61b, das Umlenkrad 62a, 62b und das Übertragungsrad 63a, 63b bilden dabei eine Art Gelenkanordnung mit zwei Schenkeln zwischen dem Antriebsrad 61a, 61b und dem Umlenkrad 62a, 62b sowie zwischen dem Umlenkrad 62a, 62b und dem Übertragungsrad 63a, 63b mit dem Gelenk im Umlenkrad 62a, 62b. Die Antriebseinheiten 22a, 22b werden im Gelenk am Umlenkrad 62a, 62b beim Bewegen der Transportelemente 21a, 21b zu- und voneinander geöffnet bzw. geschlossen. Die Antriebswirkung wird dabei dennoch zuverlässig vom Antriebsrad 61a, 61b zum Umlenkrad 62a, 62b und vom Umlenkrad 62a, 62b zum Übertragungsrad 63a, 63b übertragen. Damit wird erreicht, dass die Transportelemente 21a, 21b in jeder Position an der Führungsschiene 35 in Wirkverbindung mit dem entsprechenden Transportantrieb 60a, 60b stehen und die Transportrollen 41, 42 den Gegenstand transportieren. Das Übertragungsrad 63a, 63b kann direkt an einer Transportrolle 41, 42 eingreifen. Diese Transportrolle 41, 42 überträgt dann die Drehbewegung an eine benachbarte Transportrolle 41, 42 mittels des Verbindungselementes 43 weiter und setzt so die jeweilige Rollenbahn in Bewegung. Somit dient eine der Transportrollen 41, 42 als Teil der Antriebseinheit 22a, 22b. Im Gegensatz zur herkömmlichen Vorrichtung der Figur 1 erfordert die erfindungsgemäße Vorrichtung 10 weniger Bauteile und Getriebeelemente, was anhand der Figuren 1 und 2 ersichtlich ist.

Jedes Antriebsrad 61a, 61b, wie gezeigt in den Figuren 2, 4 und 5 ist mittels eines ersten Antriebsriemens 64a, 64b mit dem Umlenkrad 62a, 62b und das Umlenkrad 62a, 62b mittels eines zweiten Antriebsriemens 65a, 65b mit dem Übertragungsrad 63a, 63b verbunden. Der erste und der zweite Antriebsriemen 64, 65 können beispielsweise in Form eines Flach-, Zahn- oder Keilrippenriemens ausgebildet sein. Die Antriebsriemen 64, 65 bleiben permanent an den Rädern 62, 63, 64 anliegen und halten die mechanische Wirkverbindung vom Antriebsmotor 60a, 60b zu den Transportelementen 21a, 21b während des ganzen Prozesses und unabhängig von der Position der Transportelemente 21a, 21b am Gestell 31 aufrecht. Da die Transportelemente 21a, 21b auch während des Wendens angetrieben werden, kann die Transportgeschwindigkeit des Gegenstandes erheblich erhöht und die Leistung der Vorrichtung verbessert werden. Hierzu sieht die Erfindung vor, dass die Antriebseinheiten 22a, 22b während des Wendens mit den Transportelementen 21a, 21b mitgedreht werden.
Die Figuren 7 und 8 zeigen jeweils eine herkömmliche 32 und eine erfindungsgemäße Drehvorrichtung 30. Beide Vorrichtungen weisen einen Drehantrieb 32 mit einem Motor 50 auf, der als ein Trommelmotor ausgebildet ist. Der herkömmliche Drehantrieb 32 der Figur 7 wirkt nur einseitig auf die Haltevorrichtung 20 ein, wobei die Drehvorrichtung 30 der Figur 7 nur eine Drehscheibe 31 und nur ein Übertragungselement 53 aufweist, um die Antriebswirkung des Motors 50 lediglich von einer Seite an die Haltevorrichtung 20 zu übertragen. Dagegen ist die erfindungsgemäße Drehvorrichtung 30 mit einem drehbaren Gestell 31 ausgebildet, das zwei Drehscheiben 31a, 31b aufweist, um die Haltevorrichtung 20 von zwei Seiten zu umschließen. Der besondere Vorteil der Erfindung besteht dabei darin, dass der erfindungsgemäße Drehantrieb 32 das Gestell 31 beidseitig antreibt. Der erfindungsgemäße Drehantrieb 32, der in Figur 8 gezeigt ist, greift dabei das Gestell 31 an zwei Drehscheiben 31a, 31b ein, die die Transportelemente 21a, 21b beidseitig umschließen. Hierzu weist der Drehantrieb 32 zwei Getriebeelemente 51a, 51b auf, die um eine Drehwelle 52 drehbar gelagert sind, die sich parallel zur Drehachse 12 der Transportelemente 21a, 21b erstreckt. Die Drehwelle 52 wird durch den Motor 50 angetrieben und überträgt die Drehbewegung an die beiden Getriebeelemente 51a, 51b. Die Getriebeelemente 51a, 51b sind wiederum mit den beiden Drehscheiben 31a, 31b verbunden sind und treiben diese über zwei Übertragungselemente 53a, 53b, beispielsweise in Form von Flach, Zahn- oder Keilrippenriemen um die Drehachse 12 an. Gegenüber dem herkömmlichen einseitigen Drehantrieb 32 der Figur 7 ist es besonders vorteilhaft, dass beide Drehscheiben 31a, 31b aktiv durch nur den Drehantrieb 32 angetrieben werden, um die Drehbewegung gleichmäßig auf die Haltevorrichtung 20 zu übertragen. Somit kann die Drehung der Transportelemente 21a, 21b bei gleicher Leistung stabilisiert werden. Dabei können die Transportelemente 21a, 21b bei größerer Drehgeschwindigkeit zuverlässiger an den Drehscheiben 31a, 31b gehalten werden als in der Vorrichtung der Figur 7. Die herkömmliche Drehvorrichtung der Figur 7 benötigt schwere Verbindungselemente 33, um die Drehbewegung von nur einer Seite an die dem Drehantrieb abgewandte Seite der Transportelemente 21a, 21b zu übertragen. Außerdem besteht bei der herkömmlichen Vorrichtung der Figur 7 die Gefahr, dass die Transportelemente 21a, 21b aus den Verbindungsstellen mit dem Gestell 30, die dem Antrieb abgewandt sind, aufgrund ihrer Trägheit ausschlagen können. Die erfindungsgemäße Vorrichtung 10 der Figur 8 benötigt dagegen keine torsionssteifen Verbindungselemente 33, da die Drehbewegung von zwei Seiten an die Transportelemente 21a, 21b übertragen wird. Die Transportelemente 21a, 21b werden daher auch während der Drehbewegung zuverlässig am Gestell 31 gehalten, wobei gleichzeitig eine hohe Drehgeschwindigkeit der Haltevorrichtung 20 erreicht werden kann. Zudem ist es vorteilhaft, dass im Gegensatz zu einem einseitigen Drehantrieb 32 die erfindungsgemäße Drehvorrichtung 30 stabiler und dennoch leichter ausgebildet werden kann.

Die Merkmale der beschriebenen Ausführungsbeispiele der Erfindung in den Figuren 2 bis 6 und 8 können miteinander kombiniert werden, wobei es denkbar ist, dass die Vorrichtung 10 der Figur 8 mit einem Transportantrieb 22 ausgeführt werden kann, wie er in den Figuren 2 bis 5 gezeigt ist, und umgekehrt. Der Transportantrieb 22 kann dabei für jedes Transportelement 21a, 21b eine eigene Antriebseinheit 22a, 22b aufweisen. Außerdem ist es denkbar, dass anstelle von einer Rollenbahn der Figur 6 eine Förderbahn eingesetzt werden kann. Alternativ zur Ausführungsform der Figur 8 kann der Drehantrieb 32 für jede Drehscheibe 31a, 31b eine eigene Antriebseinheit aufweisen.

### Bezuaszeichenliste

- 10: Vorrichtung
- 11: Transportrichtung
- 12: Drehachse
- 13: Klemmrichtung

- 20: Haltevorrichtung
- 21a, 21b: Transportelemente
- 22: Transportantrieb
- 22a, 22b: Antriebseinheit
- 24: Verstellmechanismus
- 25a, 25b: Gleitelemente

- 30: Drehvorrichtung
- 31: Gestell
- 31a, 31b: Drehscheiben
- 32: Drehantrieb
- 33: Abstandshalter
- 34: Stoßdämpfer
- 35: Führungsschiene
- 36: Schleifring

- 40a, 40b: Befestigungselement
- 41, 42: Transportrollen
- 43: Verbindungsriemen

- 50: Motor
- 51a, 51b: Getriebeelemente
- 52: Drehwelle
- 53a, 53b: Übertragungselemente
- 60a, 60b: Antriebsmotor
- 61a, 61b: Antriebsrad
- 62a, 62b: Umlenkrad
- 63a, 63b: Übertragungsrad
- 64a, 64b: erster Antriebsriemen
- 65a, 65b: zweiter Antriebsriemen

## Patentansprüche

1. Vorrichtung (10) zum Wenden eines Gegenstandes, insbesondere eines Paketes aus gestapelten Säcken, mit
einer Haltevorrichtung (20) zum Aufnehmen, Wenden und Abgeben des Gegenstandes, die zwei Transportelemente (21a, 21b) zum Befördern des Gegenstandes aufweist,
und einer Drehvorrichtung (30) zum Drehen der Transportelemente (21a, 21b) um eine ortsfeste Drehachse (12), die ein drehbares Gestell (31) zum beidseitigen Befestigen der Transportelemente (21a, 21b) aufweist,
wobei die Transportelemente (21a, 21b) bewegbar beidseitig am Gestell (31) befestigt und in eine Klemmrichtung (13) aufeinander bewegbar sind, um den Gegenstand zum Wenden einzuklemmen, wobei die Drehvorrichtung (30) einen Drehantrieb (32) aufweist, welcher das Gestell (31) beidseitig antreibt,
**dadurch gekennzeichnet,**
**dass** die Drehvorrichtung (30) einen Stoßdämpfer (34) aufweist, um die Bewegung der Transportelemente (21a, 21b) aufeinander zu dämpfen, und dass der Stoßdämpfer (34) drehfest am Gestell (31) befestigt ist.

2. Vorrichtung (10) nach Anspruch 1,
**dadurch gekennzeichnet,**
**dass** die Haltevorrichtung (20) einen Transportantrieb (22) zum Antreiben der Transportelemente (21a, 21b) aufweist.

3. Vorrichtung (10) nach Anspruch 1 oder 2,
**dadurch gekennzeichnet,**
**dass** die Transportelemente (21a, 21b) mit einem Verstellmechanismus (24) miteinander verbunden sind, um den Gegenstand zum Wenden einzuklemmen.

4. Vorrichtung (10) nach einem der vorhergehenden Ansprüche,
**dadurch gekennzeichnet,**
**dass** der Verstellmechanismus (24) einen Pneumatikzylinder aufweist, wobei insbesondere der Pneumatikzylinder Schnellentlüftungsventile aufweist.

5. Vorrichtung (10) nach einem der vorhergehenden Ansprüche,
**dadurch gekennzeichnet,**
**dass** die Transportelemente (21a, 21b) in Form einer Rollenbahn ausgebildet sind, wobei insbesondere jedes Transportelement (21a, 21b) mindestens zwei Transportrollen (41, 42) aufweist, die mittels eines Verbindungsriemens (43), insbesondere eines Flach-, Zahn- oder Keilrippenriemens miteinander in Wirkverbindung stehen.

6. Vorrichtung (10) nach Anspruch 5, **dadurch gekennzeichnet, dass** die Transportelemente (21a, 21b) beidseitig Befestigungselemente (40a, 40b) aufweisen, die die Transportrollen (41, 42) umschließen und zum Befestigen der Transportelemente (21a, 21b) am Gestell (31) dienen.

7. Vorrichtung (10) nach einem der vorhergehenden Ansprüche,
**dadurch gekennzeichnet,**
**dass** der Drehantrieb (32) einen Motor (50), insbesondere einen Trommelmotor aufweist.

8. Vorrichtung (10) nach einem der vorhergehenden Ansprüche,
**dadurch gekennzeichnet,**
**dass** das Gestell (31) zwei Drehscheiben (31a, 31b) aufweist, um die Transportelemente (21a, 21b) beidseitig zu umschließen.

9. Vorrichtung (10) nach Anspruch 8, **dadurch gekennzeichnet, dass** jede Drehscheibe (31a, 32b) eine Führungsschiene (35) aufweist, die mit Gleitelementen (25a, 25b) zusammenwirkt, die beidseitig an den Transportelementen (21a, 21b) angeordnet sind.

10. Vorrichtung (10) nach Anspruch 8 oder 9, **dadurch gekennzeichnet, dass** der Drehantrieb (32) mindestens einen Abstandshalter (33) aufweist, der die Drehscheiben (31a, 31b) verbindet.

11. Vorrichtung (10) nach einem der vorhergehenden Ansprüche 8 bis 10, **dadurch gekennzeichnet, dass** der Drehantrieb (32) zwei Getriebeelemente (51a, 51b) aufweist, die um eine Drehwelle (52) drehbar sind, um beide Drehscheiben (31a, 31b) anzutreiben.

12. Vorrichtung (10) nach einem der vorhergehenden Ansprüche 8 bis 11, **dadurch gekennzeichnet, dass** der Drehantrieb (32) zwei Übertragungselemente (53a, 53b), insbesondere zwei Flach-, Zahn- oder Keilrippenriemen aufweist, um die Wirkung der Getriebeelemente (51a, 51b) auf die Drehscheiben (31a, 31b) zu übertragen.

13. Vorrichtung (10) nach Anspruch 2 oder einem der der auf Anspruch 2 rückbezogenen Ansprüche,
**dadurch gekennzeichnet,**
**dass** der Transportantrieb (22) drehfest am Gestell (31) befestigt ist, wobei insbesondere ein Schleifring (36) an der Drehachse (12) vorgesehen ist, um den Transportantrieb (22) mit Energie zu versorgen.

14. Vorrichtung (10) nach Anspruch 2 oder einem der der auf Anspruch 2 rückbezogenen Ansprüche,
**dadurch gekennzeichnet,**
**dass** der Transportantrieb (22) für jedes Transportelement (21a, 21b) eine Antriebseinheit (22a, 22b) aufweist.

## Claims

1. Device (10) for turning over an object, in particular a package of stacked bags, comprising:
- a holding device (20) for receiving, turning over and delivering the object and comprising two transport elements (21a, 21b) for conveying the object, and a rotating device (30) for rotating the transport elements (21a, 21b) about a fixed axis of rotation (12) and comprising a rotatable frame (31) for holding both sides of the transport elements (21a, 21b),
- wherein the transport elements (21a, 21b) are movably mounted on both sides of the frame (31), and are movable towards each other in a clamping direction (13) in order to clamp the object to be turned over,
- wherein the rotating device (30) comprises a rotary drive (32) which drives the frame (31) on both sides,
**characterized in that**
the rotating device (30) has a shock absorber (34) to damp the movement of the transport elements (21a, 21b) towards each other, and **in that** the shock absorber (34) is secured to the frame (31) in a rotationally fixed manner.

2. Device (10) according to claim 1,
**characterized in that**
the holding device (20) has a transport drive (22) for driving the transport elements (21a, 21b).

3. Device (10) according to claim 1 or 2,
**characterized in that**
the transport elements (21a, 21b) are connected to one another by means of an adjusting mechanism (24) to clamp the object to be turned over.

4. Device (10) according to one of the preceding claims,
**characterized in that**
the adjusting mechanism (24) comprises a pneumatic cylinder, wherein, in particular, the pneumatic cylinder has quick exhaust valves.

5. Device (10) according to one of the preceding claims,
**characterized in that**
**in that** each transport element (21a, 21b) is in the form of a roller conveyor, wherein, in particular, each transport element (21a, 21b) comprises at least two transport rollers (41, 42) which are operatively connected with each other by means of a connecting belt (43), in particular a flat, toothed, or V-ribbed belt.

6. Device (10) according to claim 5,
**characterized in that**
the transport elements (21a, 21b) comprise fastening elements (40a, 40b) which enclose the transport rollers (41, 42) on both sides and secure the transport elements (21a, 21b) to the frame (31).

7. Device (10) according to one of the preceding claims,
**characterized in that**
the rotary drive (32) comprises a motor (50), in particular a drum motor.

8. Device (10) according to one of the preceding claims,
**characterized in that**
the frame (31) comprises two turntables (31a, 31b) which enclose the transport elements (21a, 21b) on both sides.

9. Device (10) according to claim 8,
**characterized in that**
each turntable (31a, 32b) comprises a guide rail (35) which interacts with sliding elements (25a, 25b) which are arranged on both sides on the transport elements (21a, 21b).

10. Device (10) according to claim 8 or 9,
**characterized in that**
the rotary drive (32) comprises at least one spacer (33) which connects the turntables (31a, 31b).

11. Device (10) according to one of the preceding claims 8 to 10,
**characterized in that**
the rotary drive (32) has two gear elements (51a, 51b) which are rotatable about a rotating shaft (52) in order to drive both turntables (31a, 31b).

12. Device (10) according to one of the preceding claims 8 to 11,
**characterized in that**
the rotary drive (32) has two transfer elements (53a, 53b), in particular two flat, toothed or V-ribbed belts, in order to transfer the effect of the transfer elements (51a, 51b) to the turntables (31a, 31b).

13. Device (10) according to claim 2, or one of the dependent referring back to claim 2,
**characterized in that**
the transport drive (22) is secured in a rotationally-fixed manner to the frame (31), wherein, in particular, a slip ring (36) is provided on the axis of rotation (12) to supply the transport drive (22) with energy.

14. Device (10) according to claim 2, or one of the dependent claims referring back to claim 2,
**characterized in that**
the transport drive (22) comprises a drive unit (22a, 22b) for each transport element (21a, 21b).

## Revendications

1. Dispositif (10) pour le renversement d'un objet, plus particulièrement d'un paquet parmi des sacs empilés, avec
un dispositif de maintien (20) pour le logement, le renversement et la distribution de l'objet, qui comprend deux éléments de transport (21a, 21b) pour le convoyage de l'objet et un dispositif rotatif (30) pour la rotation des éléments de transport (21a, 21b) autour d'un axe de rotation (12) fixe, qui comprend un châssis rotatif (31) pour la fixation des deux côtés des éléments de transport (21a, 21b),
les éléments de transport (21a, 21b) étant fixés de manière mobile des deux côtés sur le châssis (31) et étant mobiles l'un vers l'autre dans une direction de serrage (13), afin de serrer l'objet pour le renversement,
le dispositif rotatif (30) comprenant un entraînement rotatif (32) qui entraîne le châssis (31) des deux côtés,
**caractérisé en ce que**
le dispositif rotatif (30) comprend un amortisseur (34) afin d'amortir le déplacement des éléments de transport (21a, 21b) l'un vers l'autre et **en ce que** l'amortisseur (34) est fixé de manière solidaire en rotation sur le châssis (31).

2. Dispositif (10) selon la revendication 1,
**caractérisé en ce que**
le dispositif de maintien (20) comprend un entraînement de transport (22) pour l'entraînement des éléments de transport (21a, 21b).

3. Dispositif (10) selon la revendication 1 ou 2,
**caractérisé en ce que**
les éléments de transport (21a, 21b) sont reliés entre eux avec un mécanisme de réglage (24) afin de serrer l'objet pour le renversement.

4. Dispositif selon l'une des revendications précédentes,
**caractérisé en ce que**
le mécanisme de réglage (24) comprend un vérin pneumatique, plus particulièrement le vérin pneumatique comprenant des soupapes d'échappement rapide.

5. Dispositif selon l'une des revendications précédentes,
**caractérisé en ce que**
les éléments de transport (21a, 21b) sont conçus sous la forme d'une bande en rouleaux, plus particulièrement chaque élément de transport (21a, 21b) comprenant au moins deux rouleaux de transport (41, 42), qui sont reliés de manière fonctionnelle entre eux au moyen d'une courroie de liaison (43), plus particulièrement d'une courroie plate, dentée ou à nervures trapézoïdales.

6. Dispositif (10) selon la revendication 5,
**caractérisé en ce que**
les éléments de transport (21a, 21b) comprennent des deux côtés des éléments de fixation (40a, 40b) qui entourent les rouleaux de transport (41, 42) et servent à fixer les éléments de transport (21a, 21b) sur le châssis (31).

7. Dispositif (10) selon l'une des revendications précédentes,
**caractérisé en ce que**
l'entraînement rotatif (32) comprend un moteur (50), plus particulièrement un moteur à tambour.

8. Dispositif (10) selon l'une des revendications précédentes,
**caractérisé en ce que**
le châssis (31) comprend deux disques rotatifs (31a, 31b) afin d'entourer les éléments de transport (21a, 21b) des deux côtés.

9. Dispositif (10) selon la revendication 8,
**caractérisé en ce que**
chaque disque rotatif (31a, 31b) comprend un rail de guidage (35), qui interagit avec des éléments glissants (25a, 25b) qui sont disposés des deux côtés sur les éléments de transport (21a, 21b).

10. Dispositif (10) selon la revendication 8 ou 9,
**caractérisé en ce que**
l'entraînement rotatif (32) comprend au moins une entretoise (33) qui relie les disques rotatifs (31a, 31b).

11. Dispositif (10) selon l'une des revendications 8 à 10,
**caractérisé en ce que**
l'entraînement rotatif (32) comprend deux éléments d'engrenage (51a, 51b) qui sont rotatifs autour d'un arbre rotatif (52) afin d'entraîner les deux disques rotatifs (31a, 31b).

12. Dispositif (10) selon l'une des revendications 8 à 11,
**caractérisé en ce que**
l'entraînement rotatif (32) comprend deux éléments de transmission (53a, 53b), plus particulièrement deux courroies plates, dentées ou à nervures trapézoïdales, afin de transmettre l'action des éléments d'engrenage (51a, 51b) sur les disques rotatifs (31a, 31b).

13. Dispositif (10) selon la revendication 2 ou une des revendications faisant référence à la revendication 2,
**caractérisé en ce que**
l'entraînement de transport (22) est fixé de manière fixe en rotation sur le châssis (31), plus particulièrement une bague de friction (36) étant prévue sur l'arbre rotatif (12), afin d'alimenter l'entraînement de transport (22) en énergie.

14. Dispositif (10) selon la revendication 2 ou une des revendications faisant référence à la revendication 2,
**caractérisé en ce que**
l'entraînement de transport (22) pour chaque élément de transport (21a, 21b) comprend une unité d'entraînement (22a, 22b).
